# EUROPEAN PATENT APPLICATION

(11) **EP 4 568 225 A1**
(43) Date of publication of application: **11.06.2025**
(21) Application number: 24217155.1
(22) Date of filing: 03.12.2024
(51) Int. Cl.: H04L 61/2514, H04L 61/2517, H04L 61/2521, H04L 65/1069

(54) **SYSTEMS AND METHODS FOR ESTABLISHING A CALL BETWEEN A WIRELESS TERMINAL IN A MULTI-CELL NETWORK AND A SERVER**

(30) Priority: 05.12.2023 US 202318529699
(71) Applicant: Vtech Telecommunications Limited, New Territories Hong Kong (HK)
(72) Inventor:
(74) Representative: D Young & Co LLP

(57) **Abstract**

Systems and methods of establishing a call between a wireless terminal, which is associated with a secondary base station of a multi-cell system, and a server via network address translation-based packet forwarding by a primary base station of the multi-cell system. The method includes receiving, at the primary base station of the multi-cell system, a request to establish a call between the secondary base station of the multi-cell system and the server. The method further includes adding a set of forwarding rules to a network address translation table of the primary base station. The set of forwarding rules instructs the primary base station to forward packets of the call received from the server to the secondary base station and to forward packets of the call received from the secondary base station to the server.

## Description

### BACKGROUND

### Technical Field

The present disclosure generally relates to establishing a call between a wireless terminal in a multi-cell network and a server and, in particular, establishing a call between a wireless terminal localized to a secondary base station in a multi-cell network and an end or extpernal server using packet forwarding by a primary base station.

### Description of the Related Art

To reach non-local terminals via a Voice over Internet Protocol (VoIP) network, a wireless terminal may connect to an end or external server via a base station. Typically, a multi-cell network will include a primary base station (i.e., "master" base station) that is responsible for connecting the call to the end server and multiple secondary base stations (i.e., "slave" base stations) that connect a call from a user terminal to the primary base station.

Resource contention and processor loading issues can arise in the primary base station, especially during high call traffic, because all calls from other base stations must go through the VoIP processor of the primary base station to reach the end server. To help resolve the resource contention, additional processors and processor cores are often added to primary base stations. However, such hardware-based solutions are generally expensive and difficult to scale.

### SUMMARY

Particular aspects are set out in the appended independent claims. Various optional embodiments are set out in the dependent claims.

Disclosed embodiments are directed to establishing a call between a wireless terminal associated with a secondary base station of a multi-cell system and a server via network address translation-based forwarding, in kernel space or via a user-space application, by a primary base station of the multi-cell system. The embodiments provide a low cost, scalable, method for assisting primary base stations in multi-cell sites with handling high call traffic.

Disclosed embodiments are directed to the use of a firewall application in a primary base station to forward IP media packets streaming between a secondary base station and a pre-determined destination, such as an external or end VoIP server. Session Description Protocol (SIP) information from a VoIP call on a primary base station may be used to populate the firewall forwarding rules to allow forwarding of media packets from a secondary base station to and from a port and IP address specified in an SDP header.

In one aspect, disclosed embodiments are directed to a method, system, and computer-readable media for establishing a call between a wireless terminal and a server, the wireless terminal associated with a secondary base station of a multi-cell network, via network address translation-based packet forwarding by a primary base station of the multi-cell network. The method includes receiving, at the primary base station of the multi-cell network, a request to establish a call between the secondary base station of the multi-cell network and the server. The method further includes adding a set of forwarding rules to a network address translation table of the primary base station. The set of forwarding rules instruct the primary base station to forward packets of the call received from the server to the secondary base station and to forward packets of the call received from the secondary base station to the server.

Embodiments may include one or more of the following features, individually or in combination.

The adding of the set of forwarding rules to the network address translation table may be performed by an application running on one or more processors of the primary base station. The adding of the set of forwarding rules to the network address translation table may be performed by a kernel of an operating system running on one or more processors of the primary base station. The adding of a set of forwarding rules may include adding a first rule to change a destination address of the packets to an address of the secondary base station for packets inbound to the primary base station from the server; adding a second rule to change a source address of the packets to an address of the primary base station for packets outbound from the primary base station to the secondary base station; adding a third rule to change a destination address of the packets to an address of the server for packets inbound from the secondary base station to the primary base station; and adding a fourth rule to change a source address of the packets to an address of the primary base station for packets outbound from the primary base station to the server.

One or more of the following may include an IP address and a port value: the destination address of the packets, the address of the secondary base station, the source address of the packets, the address of the primary base station, and the address of the server. The set of forwarding rules may include a first subset of forwarding rules for forwarding real time protocol (RTP) packets and a second subset of forwarding rules for forwarding real time control protocol (RTCP) packets.

The method may further include determining whether the call has been terminated; and based on said determining whether the call has been terminated, deleting the set of forwarding rules. One or more outbound packets may flow from the primary base station to the server and/or secondary base station are disabled after the receiving of the request to establish a call between the secondary base station and the server.

The method may further include generating an entry for the call in a call table, wherein the entry includes an indication of whether the set of forwarding rules is enabled for the call, a destination address of the server, and a destination address of the secondary base station for the call. The method may further include determining whether the call has terminated; and based on said determining whether the call has ended, deleting the entry for the call in the call table. The set of forwarding rules may be indicated as enabled in the entry for the call if the set of forwarding rules has been added to the network address translation table. The entry for the call may further include one or more pointers identifying the call, said one or more pointers including a first pointer identifying a message flow between the primary base station and the server and a second pointer identifying a message flow between the primary base station and the second primary base station. The entry for the call may further include one or more media transport states of the call received via session description protocol (SDP), said one or more media transport states including one or more media states of a message flow between the primary base station and the server and a media transport state of a message flow between the primary base station and the secondary base station.

The method may further include determining whether to update or delete the set of forwarding rules based on one or more SIP signaling events. The method may further include determining whether one or more endpoints have changed; and based on said determining whether one or more endpoints have changed, deleting the set of forwarding rules and adding a new set forwarding rules to the network address translation table. The method may further include saving said one or more endpoints which have changed to a call table that includes a destination address of the server and a destination address of the secondary base station.

The method may further include receiving a call hold indication; deleting the set of forwarding rules based on said receiving a call hold indication; receiving a call resume indication; and adding a new set of forwarding rules to the network address translation table based on said receiving a call resume indication. The method may further include determining, prior to said deleting the set of forwarding rules, whether the call hold indication was received from the secondary base station; and proceeding, upon determining that the call hold indication was received from the secondary base station, with said deleting the set of forwarding rules.

The set of forwarding rules may be configured after one or more media port selections have been completed but before any media packets of the call have been received. The method may further include, after said adding a set of forwarding rules, deleting each packet flow between the primary base station and the server and the primary base station and the secondary base station tracked by a kernel connection tracker. The method may further include disabling an outbound redirect message from the primary base station to the server; and disabling an outbound redirect message from the primary base station to the secondary base station. The outbound redirect message from the primary base station to the server and the outbound redirect message from the primary base station to the secondary base station are internet control message protocol version 6 (ICMPv6) messages.

The method may further include creating, prior to said adding the set forwarding rules to the network address translation table, a shell process that includes a destination address of the secondary base station, a destination address of the server, and a source address of the primary base station. The shell process may be further configured to run an *iptables* command to add the set of forwarding rules to the network address translation table.

### BRIEF DESCRIPTION OF THE DRAWINGS

Figure 1 depicts a set of equipment for a Digital Enhanced Cordless Telecommunications (DECT) system including a multi-cell base station and a number of wireless terminals.
Figure 2 depicts a primary base station and a number of secondary base stations of a DECT multi-cell system, each of which is responsible for communicating with wireless terminals.
Figures 3A and 3B depict a multi-cell DECT system in which a call is established between a wireless terminal localized to the second primary base station and a server using packet forwarding by the primary base station.
Figure 4A is a diagram depicting packet stream flows for a call to an end or external server from a wireless terminal associated with a secondary base station using a proxy call generated by the VoIP application of the primary base station, which is in communication with the end or external server.
Figure 4B is a diagram depicting packet stream flows for a call to an end or external server from a wireless terminal associated with a secondary base station using packet forwarding by the primary base station, which is in communication with the end or external server.
Figure 5 depicts a proxy call table of an application for tracking call forwarding via network address translation-based forwarding by a primary base station.
Figure 6 depicts the signal flow for an example of forwarding a stream of packets of a call between a wireless terminal and a deskset.
Figure 7 is a flowchart of a method for establishing a call between a wireless terminal and a server, the wireless terminal associated with a secondary base station of a multi-cell network, via network address translation-based packet forwarding by the primary base station of the multi-cell network.
Figure 8 is a flowchart of a method for performing the adding of a set of forwarding rules in the method of Fig. 7 for establishing the call between the wireless terminal associated with the secondary base station and the server via network address translation-based packet forwarding by the primary base station.
Figure 9 is a flowchart of a method for handling a call between the wireless terminal associated with the secondary base station and the server placed on hold.

Where considered appropriate, reference numerals may be repeated among the drawings to indicate corresponding or analogous elements. Moreover, some of the blocks depicted in the drawings may be combined into a single function.

### DETAILED DESCRIPTION

Reference will now be made in detail to the disclosed embodiments, examples of which are illustrated in the accompanying drawings. While the presently taught techniques will be described in conjunction with these embodiments, it will be understood that they are not intended to limit the scope to these specific embodiments. On the contrary, the scope is intended to cover alternatives, modifications, and equivalents that fall within the scope of the appended claims. Furthermore, in the following detailed description, numerous specific details are set forth to provide a thorough understanding of the presently taught approaches. However, it will be understood by those of ordinary skill in the art that the presently taught approaches may be practiced without these specific details. In other instances, well-known methods, procedures, components, and circuits have not been described in detail so as not to unnecessarily obscure aspects of the presently taught approaches.

Digital Enhanced Cordless Telecommunications (DECT) is a standard that primarily describes the wireless connection between cordless phones and their base stations. DECT uses Time Division Multiple Access (TDMA) to allow multiple handsets to communicate with the base station simultaneously. It divides the communication channel into multiple time slots, and each handset is assigned a specific time slot in which to transmit and receive information.

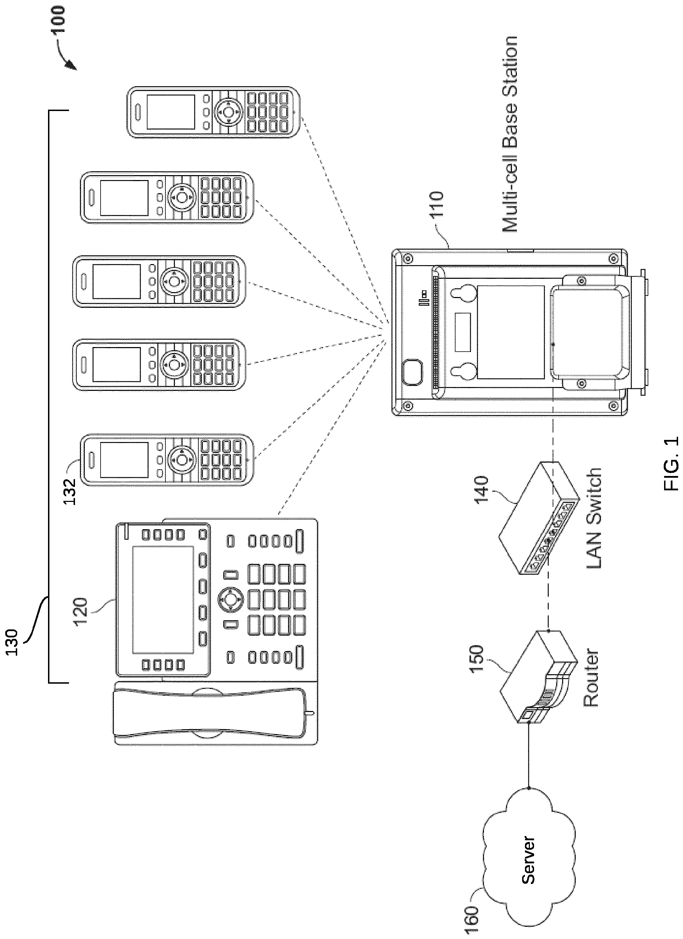

Figure 1 depicts a set of equipment 100 for a DECT system including a multi-cell base station 110 and a number of wireless terminals 130. In the example depicted, the base station 110 is set up to communicate with a cordless deskset 120 and a number of cordless handsets 132. In some cases, the base station 110 may be connected to a local area network (LAN) switch 140, which is in communication with a router 150. The router 150, in turn, may be connected to a server 160, e.g., an external or end Voice Over Internet Protocol (VoIP) server. Additionally, the router 150 may be connected to other types of servers, such as a hosted Internet Protocol (IP) private branch exchange (PBX) (not shown) which provides access to the public switched telephone network.

In embodiments, there are multiple base stations 110 and wireless communication terminals 130, which may roam among base stations 110 during operation. One base station may be set up as a primary base station and all other base stations may be set up as secondary base stations.

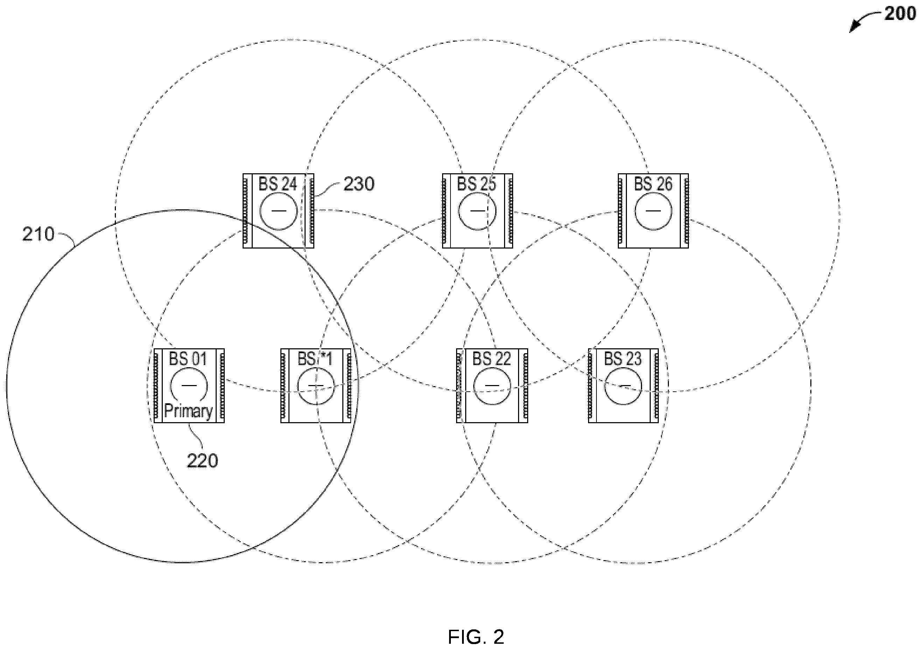

Figure 2 depicts a primary base station 220 and a number of secondary base stations 230 of a DECT multi-cell system 200, each of which is responsible for communicating with wireless terminals 130 (see Fig. 1), e.g., cordless handsets, within a specific area or "cell" 210. Each cell 210 overlaps with the neighboring cells to ensure there are no gaps in coverage.

When a wireless terminal 130 is first used in the system 200, it is registered with the base stations (220, 230), which record its unique ID. Generally, when the wireless terminal 130 makes a call, the closest base station (220, 230) sets up the call, i.e., the base station (220, 230) to which the wireless terminal 130 is "localized." This process is facilitated through a frequency/time slot pattern, with each base station (220, 230) and handset pairing given a unique pattern to avoid interference. As a wireless terminal 130 moves from the coverage area, i.e., cell 210, of one base station (220, 230) to another, the system performs a handover. This involves the base station with a weakening signal handing over the connection to the base station where the signal is getting stronger. This process is seamless to the user, who does not experience any interruption in their call.

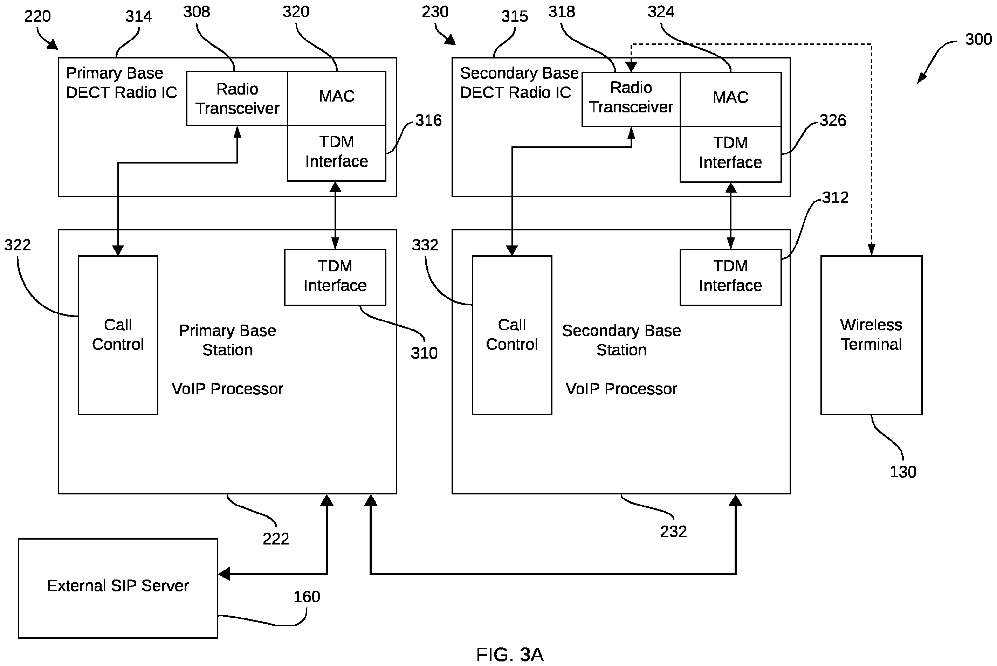

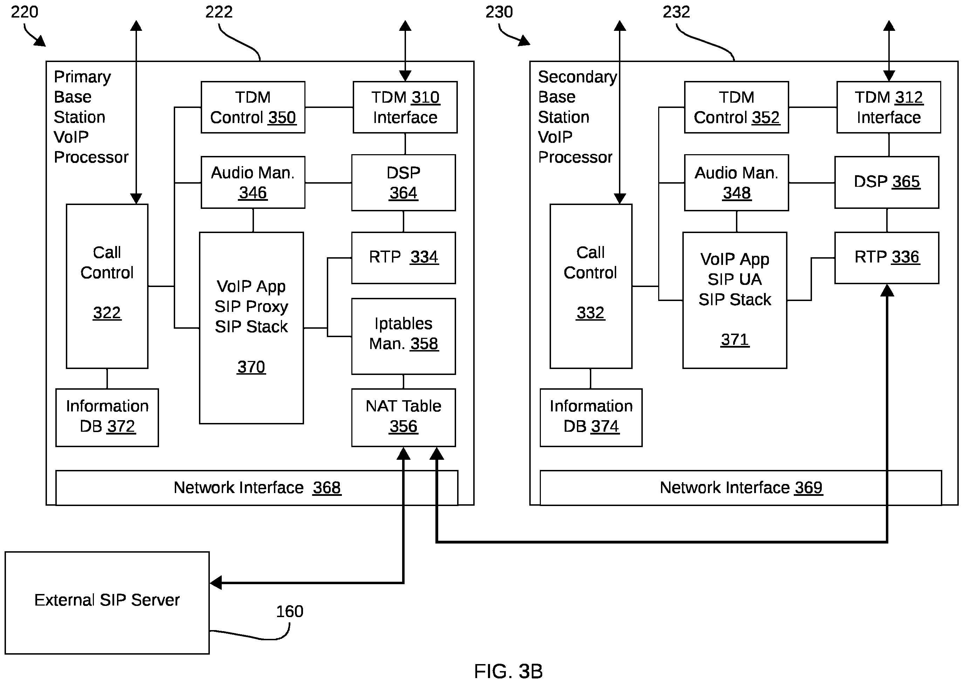

Figures 3A and 3B depict a multi-cell DECT system 300 in which a call is established between a wireless terminal 130 localized to the secondary base station 230 and a server 160 using packet forwarding by the primary base station 220. Specifically, the DECT system 300 may establish a Voice over Internet Protocol (VoIP) call between the wireless terminal 130 and the server 160, e.g., an external or end VoIP server. In the example depicted, the wireless terminal 130 has localized to (i.e., become associated with) the nearest base station, e.g., the secondary base station 230. The secondary base station 230 communicates with the primary base station 220 for external or end connectivity, e.g., communication with the server 160. The wireless terminal 130 may initiate the call to the server 160 by signaling the secondary base station 230, which forwards the request to the primary base station 220.

The primary base station 220, which is connected to an Internet Protocol (IP) network, converts the call request to the appropriate VoIP protocol, e.g., Session Initiation Protocol (SIP), in which case an SIP INVITE request is sent out to the server 160 signaling the intention to establish a call. The server 160 processes the request and responds, with an SIP OK if everything is in order or with an appropriate SIP error message if there is a problem. The primary base station 220 receives the response from the server 160 and forwards the appropriate signaling back to the wireless terminal 130 through the secondary base station 230. Once the call is accepted, the primary base station 220 and the server 160 negotiate the technical parameters of the call, such as the codecs to be used.

In conventional approaches, two call legs are established: (1) a proxy call leg between the primary base station 220 and the secondary base station 230, and (2) an actual call leg between the primary base station 220 and the server 160. As noted above, resource contention and processor loading issues can arise in the primary base station 220, especially during high call traffic, because all calls must be processed by the VoIP processor 222 of the primary base station 220 to reach the server 160.

The VoIP processors 222, 232 of the primary base station 220 and secondary base station 230 each include a Call Control module 322, 332 (respectively) which is responsible for handling higher-level functions related to establishing, maintaining, and tearing down calls. In particular, the Call Control module 322, 332 handles signaling, setting up a channel for communication, and interfacing with end and/or external servers (e.g., a VoIP server). The Call Control module 322, 332 interacts with signaling protocols (e.g., SIP in the context of VoIP), manages resources of the base station, handles mobility aspects, such as handover, which occurs when a DECT handset moves between base stations.

The primary base station 220 and secondary base station 230 include a radio integrated circuit (IC) 314 and 315 (respectively) which handles the wireless radio frequency (RF) communication between the DECT base station and the DECT handsets. Each radio IC 314, 315 includes a radio transceiver 308 and 318 which handles the physical transmission and reception of RF signals, modulates the digital data to be transmitted wirelessly via RF signals, and demodulates received RF signals to retrieve the received digital data.

Each radio IC 314 and 315 includes a medium access control (MAC) module 320 and 324 (respectively), which is responsible for managing the Time Division Multiple Access (TDMA) time slots and ensuring that each device (e.g., base station or handset) transmits or receives in its allocated time, avoiding collisions. DECT allows for multiple parallel communications, such as voice, data, and control signals, over the same channel. The MAC module 320, 324 handles the multiplexing of these different types of communication into the TDMA structure.

In each radio IC 314, 315, the MAC module 320, 324 is in communication with the radio IC end of a Time Division Multiplexing (TDM) interface 316 and 326 which functionally connects the radio IC to the VoIP processor 222 and 232 of the base stations 220, 230 via the VoIP end of the TDM interface 310 and 312 (respectively). The data input and output by the VoIP end of the TDM interface 310, 312 is processed by other components of the VoIP processor 222, 232, as discussed in further detail below.

Figure 3B shows further detail of the VoIP processors 222, 232 of the primary base station 220 and secondary base station 230. The VoIP processors 222, 232 each include a network interface 368, 369 for connecting to IP-based networks, e.g., local area networks and the Internet. Additionally, as discussed above, both the primary base station 220 and the secondary base station 230 each have a Call Control 322, 332 (respectively) for controlling the VoIP processor and other functions of the base stations.

The Call Control 322, 332 may each interact with an information data base 372, 374 responsible for storing call-related information, such as SIP data. The Call Control 322, 332 interacts with a Voice over Internet Protocol application (VoIP APP) 370, 371, which handles call setup, management, and termination. Specifically, the VoIP application 370, 371 handles signaling protocols, such as Session Initiation Protocol (SIP), to establish, manage, and terminate calls over the IP network. For example, the VoIP application sends and receives signaling messages, such as INVITE, ACK, BYE, etc. The VoIP application 370, 371 is also responsible for the RTP (Real-time Transport Protocol) streams, including packetizing the voice data, handling sequence numbering, timestamping, etc.

The base stations 220, 230 also include the following: the Audio Manager 346, 348 for handling audio packets; TDM Control 350, 352 which interacts within the VoIP end of the TDM Interface 310, 312 (discussed above) to control time division multiplexing and demultiplexing; the digital signal processor (DSP) 364, 365; and the RTP module 334, 336, which is responsible for handling real time protocol (RTP) packets and real time protocol control (RTCP) packets.

In embodiments, the primary base station 220 includes an Iptables Manager application 358. The VoIP App 370 may interact with the Iptables Manager 358 and can provide updates to the Iptables Manager 358 based on Session Initiation Protocol (SIP) information including Session Description Protocol (SDP) received from the server 160 or the secondary base station 230 regarding a call.

The Iptables Manager 358 can be configured to modify forwarding rules handled by a kernel (and/or an application in user space) of the primary base station 220. In embodiments, the Iptables Manager 358 may modify rules within the network address translation (NAT) table 356 managed by the kernel (and/or a user-space application). In embodiments, the Iptables Manager 358 may modify rules within the NAT 356 by using the *iptables* command.

For example, the primary base station 110 may run a Linux operating system. In such a case, the *iptables* command controls the firewall operations, such as packet filtering, NAT management, and packet mangling by defining rule sets. The Iptables Manager 358 may add a set of forwarding rules to the NAT 356 handled, e.g., by the kernel, of the primary base station 220 using the *iptables* command. The forwarding rules can instruct the kernel to forward packets of the call received from the server 160 to the secondary base station 230 and to forward packets of the call received from the secondary base station 230 to the server 160, thereby completing the call without setting up a proxy call and without accessing the VoIP application 370 of the primary base station 220.

Generally, as data packets from the network enter the kernel, the packets are compared with the forwarding rules and acted on accordingly (e.g., accepted, dropped, or modified). The forwarding rules established in the NAT 356 can contain rules for modifying the source and destination IP address and port values in the IP packet header. Thus, as depicted in Figure 3B, the stream of data packets comprising the call may go to and from the sever 160 to the NAT 356 of the primary base station 220 to the RTP 336 of the secondary base station 230, without undergoing VoIP processing by the primary base station 220, by virtue of the NAT-based forwarding the steam of data packets.

In embodiments, the Iptables Manager 358 can add the set of forwarding rules to the NAT 356 managed by the primary base station 220 (e.g., by the kernel thereof) upon the primary base station 220 receiving a request to establish a call between the secondary base station 230 and the server 160. Similarly, in embodiments, the Iptables Manager 358 may delete the call forwarding rules from the NAT 356 based on determining that the call has been terminated. Thus, the NAT 356 may be returned to its original state after the call is terminated.

As discussed above, the Iptables Manager 358 may receive SIP information for the call from the VoIP APP 370. In embodiments, events from the SIP of the call may drive the Iptables Manager 358. For example, the Iptables Manager 358 may be driven by the SIP stack. In embodiments, all operations and API calls may be made within the SIP stack thread context. Thus, the Iptables Manager 358 may be single threaded.

Each call may include a call leg (e.g., call between primary base station 220 and secondary base station 230 or call between primary base station 220 and the sever 160). In embodiments, the Iptables Manager 358 may be driven by both signaling events associated with SIP signaling traffic on a particular call leg and media events associated with Subscription Data Protocol (SDP) media negotiated during the particular call leg may drive the Iptables Manager 358. The SDP media may be represented via CCall and CMedia objects.

For example, the SDP may include an indication that the call has been terminated. In another example, the forwarding rules may be determined on one or more addresses received via session description protocol (SDP). In embodiments, the addresses necessary for packet forwarding under the forwarding rules (e.g., IP address and port values) are specified in an SDP header.

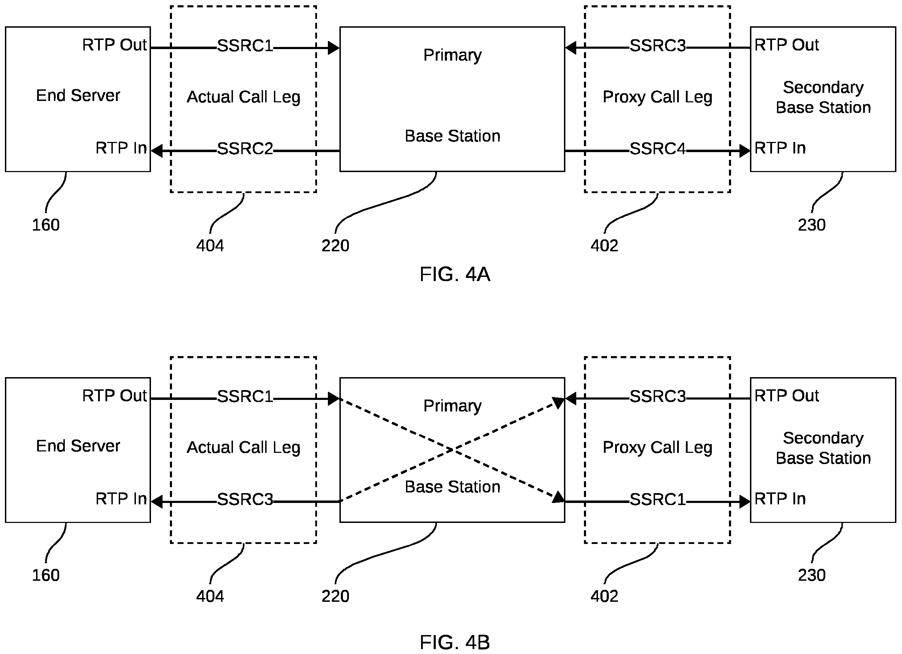

Figure 4A is a diagram depicting packet stream flows for a call to an end or external server 160 from a wireless terminal associated with a secondary base station 230 using a proxy call generated by the VoIP application of the primary base station 220, which is in communication with the end or external server 160. In the example, there are two call legs: (1) a proxy call leg 402 between the primary base station 220 and the secondary base station 230, and (2) an actual call leg 404 between the primary base station 220 and the server 160. Each call leg has an inbound and an outbound stream of packets. The stream of packets may be RTP streams and/or RTCP streams.

Figure 4B is a diagram depicting packet stream flows for a call to an end or external server 160 from a wireless terminal associated with a secondary base station 230 using packet forwarding by the primary base station 220, which is in communication with the end or external server 160. The dashed arrows within the primary base station 220 indicate the network address translation-based (NAT-based) forwarding of packet streams. In embodiments, as shown in the figure, the outbound packet streams (SSRC2, SSRC4) from the primary base station 220 to the server 160 and/or secondary base station 230 are disabled after the receiving of a request to establish a call between the secondary base station 230 and the server 160. This is because the outbound packets streams (SSRC2 and SSRC4, see Fig. 4A) are no longer needed, as the inbound packet streams (SSRC1, SSRC3) are now being forwarded based on the forwarding rules (represented by the dashed lines in Fig. 4B). Thus, while Figure 4A illustrates four total streams (SSRC1, SSRC2, SSRC3, SSRC4), Figure 4B illustrates only two packet streams: one stream inbound from secondary base station 230 (SSRC3) and another stream inbound from the server 160 (SSRC1).

In embodiments, the forwarding rules may include a first rule to change a destination address of the packets to an address of the secondary base station 230 for packets inbound to the primary base station 220 from the server 160; a second rule to change a source address of the packets to an address of the primary base station for packets outbound from the primary base station to the secondary base station; a third rule to change a destination address of the packets to an address of the server for packets inbound from the secondary base station to the primary base station; and a fourth rule to change a source address of the packets to an address of the primary base station for packets outbound from the primary base station to the server. The destination address of the packets, the address of the secondary base station, the source address of the packets, the address of the primary base station, and the address of the server may comprise an IP address and a port value.

In embodiments, the first rule and third rule may each constitute a destination network address translation (DNAT) rule. In embodiments, the second rule and fourth rule may each constitute a source network address translation (SNAT) rule. In embodiments, the forwarding rules may include a first subset of forwarding rules for forwarding RTP packets and a second subset of forwarding rules for forwarding RTCP packets. The first subset of forwarding rules may use even port values for each source address and destination address and the second subset of forwarding rules may use odd port values for each source address and destination address. Further, each port value assigned by the second subset of forwarding rules may be a next highest odd port value of a corresponding even port value assigned by the first subset of forwarding rules.

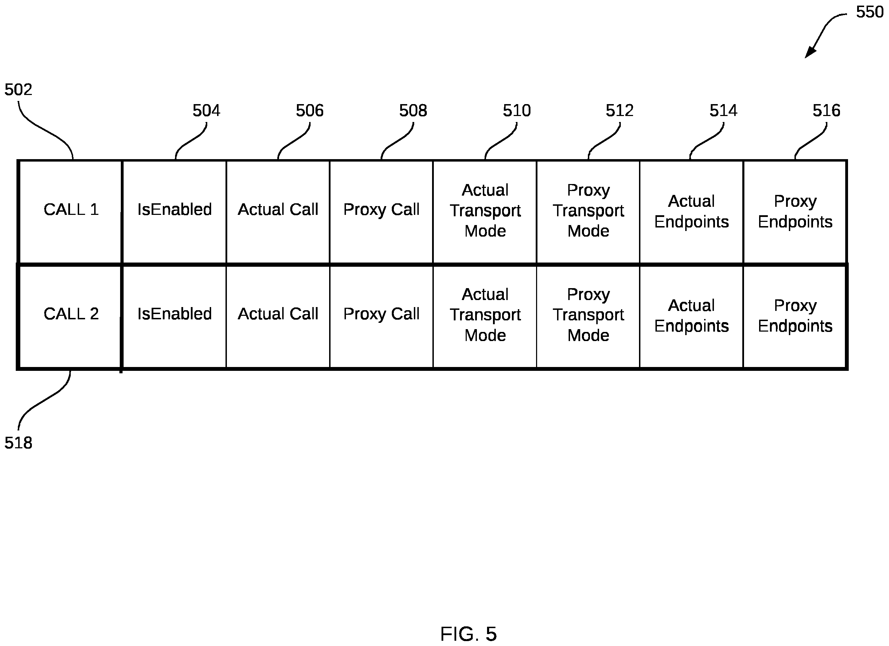

Figure 5 depicts a call table 550 for tracking call forwarding by a primary base station. In embodiments, the Iptables Manager 358 may keep track of the information for all calls in the call table 550. In embodiments, the Iptables Manager 358 may generate an entry for the call in the call table 550, wherein the entry includes an indication of whether the set of forwarding rules is enabled for the call, a destination address of the server, and a destination address of the secondary base station for the call. The set of forwarding rules may be indicated as enabled in the entry for the call if the set of forwarding rules has been added to the network address translation table managed by the kernel (and/or a user-space application). The entry for the call further may include one or more pointers identifying the call. The one or more pointers identifying the call include a first pointer identifying a message flow between the primary base station 220 and the server 160 (e.g., actual call leg 404) and a second pointer identifying a message flow between the primary base station 220 and the second primary base station 220 (e.g., proxy call leg 402).

In embodiments, the entry for the call further includes one or more media transport states of the call. The one or more media transport states of the call may be received via SDP. For example, the one or more media transport states may include one or more media states of a message flow between the primary base station (220) and the server (160) (e.g., actual call leg 404) and a media transport state of a message flow between the primary base station (160) and the secondary station (230) (e.g., proxy call leg 402). The media transport states can be in a closed state ("closed"), a send and receive state ("sendrev"), a receive only state ("recvonly"), or a send only state ("sendonly"). Thus, each row of the call table 550 may contain information about the call, including: CCall objects for the actual and proxy call legs, CMedia transport modes (indicating the state of the media such as CLOSED, SENDRECV, RECVONLY, etc), local/remote IP address and port values for the media streams, and whether NAT forwarding rules are currently enabled or disabled.

For example, as depicted in Figure 5, element 502 indicates that the first row is for a first proxy call (e.g., proxy call 402), element 504 indicates whether the forwarding rules for call 1 are enabled, element 506 includes a pointer to CCal object of the actual call leg of call 1 (e.g., actual call leg 404), element 508 includes a pointer to CCall object of the proxy call leg of call 1 (e.g., proxy call leg 402), element 510 includes the actual CMedia transport mode of the actual call leg of call 1, element 512 includes the proxy CMedia transport mode of the proxy call leg of call 1, element 514 includes local and remote IP address and port values of the actual call leg of call 1, and element 516 includes local and remote IP address and port values of the proxy call leg of call 1. The Iptables Manager 358 may keep track of more than one call at a time. Thus, as depicted in Figure 5, the call table 550 may include a second call (call 2) in a second row represented by element 518.

In embodiments, the Iptables Manager 358, may delete the entry for the call in the call table upon determining that the call has terminated. Thus, the Iptables Manager 358 can act based on signaling or media events such as creating/deleting a table row when a call is established/deleted, or setting/deleting rules when the SDP indicates the media session are active or closed. Furthermore, such signaling or media events may also control when the Iptables Manager 358 adds/deletes the forwarding rules. For example, prior to adding a set of forwarding rules, the Iptables Manager 358 may determine that the call is determined to have a media transport state of send and receive ("sendrecv"). In another example, the Iptables Manager 358 may receive an indication via SDP of a media transport state of "closed" for the call. This would indicate that the call is terminated. Based on the indication that the call is terminated, the Iptables Manager 358 deletes the forwarding rules from the NAT 356 and deletes the row associated with the call from the call table 550.

In one example, on an inbound proxy call, the server 160 initiates the actual call leg 504 to the primary base station 220 which forwards the proxy call leg 402 to the secondary base station 230. If the wireless terminal 130 answers the call, a new row can be added to the call table 550 containing the pointer to the proxy CCall object. Similarly, when the actual call leg 404 to server 160 is answered, the pointer to the actual CCall is stored in the corresponding table row. Thus, the Iptables Manager 358 tracks the transport modes of both actual and proxy CCall/CMedia objects.

Initially, both transport modes are CLOSED. When SDP negotiation completes, and the media transport endpoints (e.g., IP address and UDP port values) are established, CMedia::SetMode is called with mode SENDRECV. The Iptables Manager 358 is notified, and if the modes for both call legs are SENDRECV, the forwarding rules are set. RTP forwarding begins between the primary base station 220 and secondary base station 230, and also between the primary base station 220 and the server 160. Because the proxy call uses RTP forwarding, the two outbound RTP audio streams from M500 are not required (and may be disabled). Disabling of outbound audio on a call leg is handled by deactivating the Audio Manager 346 of the primary base station 220 (depicted in Figure 3B) in the CMedia object (of the associated CCall).

When the CMedia is created (in CCall::InitMedia), the rtpForwarding argument (passed to the CMedia constructor) determines whether Audio Manager 346 is enabled or disabled. For proxy call legs, or actual call legs that have an associated proxy call leg, this flag is enabled when the CMedia object is instantiated. When either side terminates the call, invokes CMedia::SetMode method with mode CLOSED. If the modes for both call legs are CLOSED, the Iptables Manager 358 deletes the forwarding rule thus ending RTP and/or RTCP forwarding between primary base station 220 and secondary base station 230 and primary base station 220 and server 160. When the destructor for the actual/proxy CCall objects are invoked, the Iptables Manager 358 deletes the corresponding row in the proxy call table.

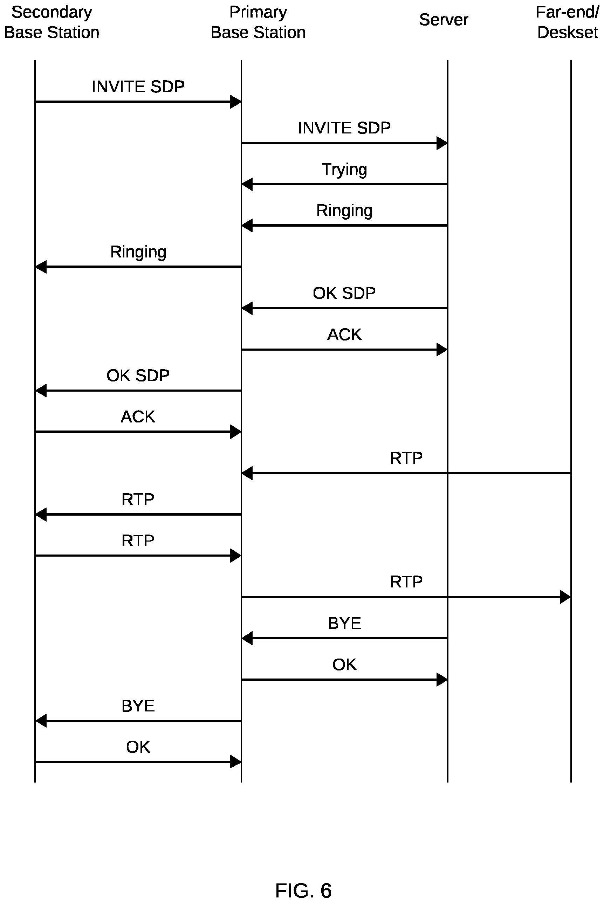

Figure 6 depicts the signal flow for an example of forwarding a stream of packets of a call between a wireless terminal localized to a secondary base station and a far end deskset using an OpenSIPS server. The secondary base station sends an SIP request for a send/receive audio session with primary base station. This is the initiation request of the proxy call leg. The primary base station sends an SIP request for a send/receive audio session with the server. This is the initiation of the actual call leg from the point of view of the primary base station (i.e., the primary base station is initiating an actual call leg to the server).

The server confirms the request by sending a trying and ringing message to the primary base station which, in turn, sends a ringing message to the secondary base station. Once the session has been confirmed, the server sends a confirmation message to the primary base station via SDP (e.g., OK SDP). The primary base station in turn, sends an acknowledgement message (e.g., ACK) to the server. The primary base station then confirms the session the secondary base station via SDP to the secondary base station which in turns responds acknowledging that the session has been initiated.

Once the call has been established, the Iptables Manager may enable the forwarding rules in the NAT managed by the primary base station (e.g., by the kernel thereof) to forward the call. However, because the server uses direct media streams (such as, for example, OpenSIPS server) the RTP (or RTCP) streams, as depicted, will bypass the server and go directly to the primary base station which will send the media streams to the secondary base station. Similarly, when the primary base station receives the RTP (or RTCP) streams from the secondary base station, the primary base station will bypass the server and send the RTP (or RTCP) streams directly to the deskset.

Accordingly, when the server is an SIP (e.g., OpenSIP) server, the Iptables Manager can set forwarding rules so that the RTP (and/or RTCP) streams are forwarded to and from the far end server or device, e.g., a deskset, bypassing the server. Once the call has been terminated, the server can send a message to the primary base station via SIP (e.g., BYE) that the call has ended. The primary base station responds to acknowledge that the call has been terminated (e.g., BYE). Similarly, the primary base station sends a message via SIP to the secondary base station that the call has been terminated and the secondary base station can respond acknowledging that the call has been terminated. Once the call has been terminated, the Iptables Manager can delete the forwarding rules from the NAT managed by the primary base station.

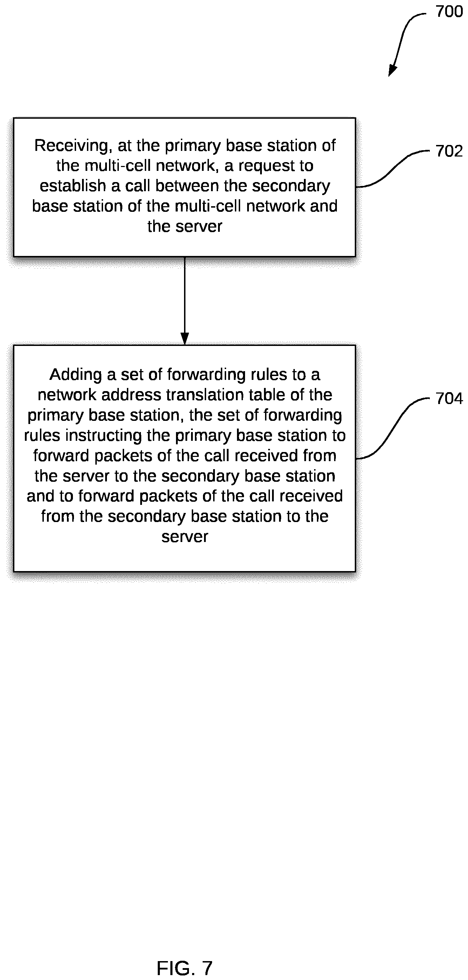

Figure 7 is a flowchart of a method 700 of establishing a call between a wireless terminal and a server, the wireless terminal associated with a secondary base station of a multi-cell network, via network address translation-based packet forwarding by the primary base station of the multi-cell network.

The method 700 includes receiving, at the primary base station, a request to establish a call between the secondary base station and the server (702). The method 700 further includes adding a set of forwarding rules to a network address translation table of the primary base station. The set of forwarding rules instructs the primary base station to forward packets of the call received form the server to the secondary base station and to forward packets of the call received from the secondary base station to the server (704).

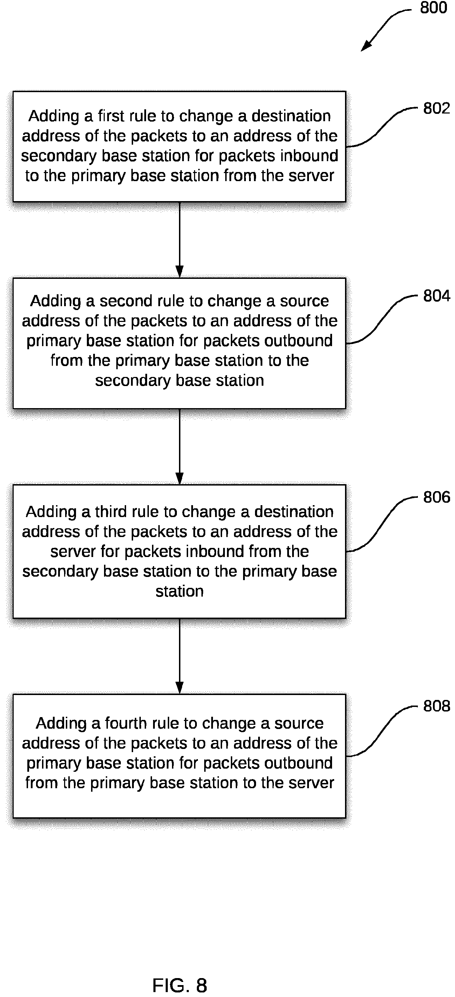

Figure 8 is a flowchart of a method 800 for performing the adding of a set of forwarding rules in the method 700 discussed above for establishing a call between a wireless terminal associated with a secondary base station and a server via network address translation-based packet forwarding by a primary base station.

The method 800 includes adding a first rule to change a destination address of the packets to an address of the secondary base station for packets inbound to the primary base station form the server (802). The method 800 further includes adding a second rule to change a source address of the packets to an address of the primary base station for packets outbound from the primary base station to the secondary base station (804). The method 800 further includes adding a third rule to change a destination address of the packets to an address of the server for packets inbound from the secondary base station to the primary base station (806). The method 800 further includes adding a fourth rule to change a source address of the packets to an address of the primary base station for packets outbound from the primary base station to the server (808).

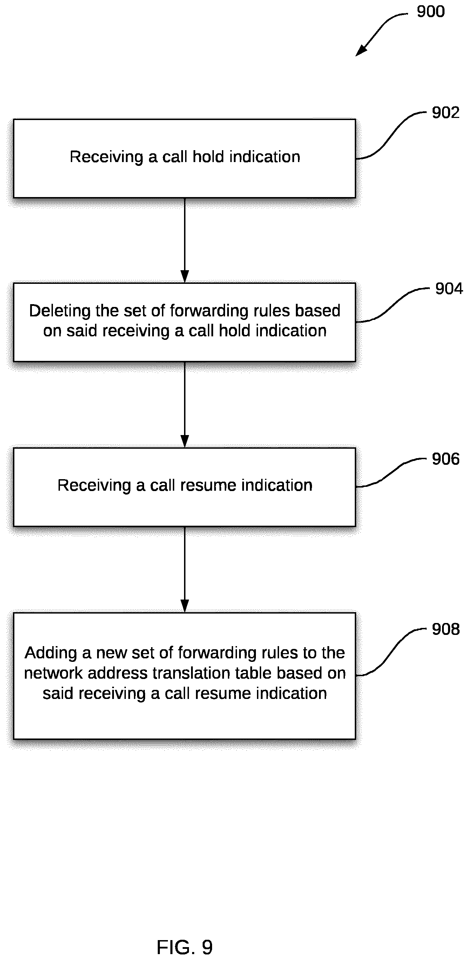

Figure 9 is a flowchart of a method 900 for handling a call between the wireless terminal associated with the secondary base station and the server when the call is placed on hold. The method 900 includes receiving a call hold indication (902). In embodiments, the call hold indication comprises a session initiation protocol (SIP) message. For example, an SIP reINVITE occurs in call scenarios such as hold/resume, early media, and music on hold (MoH), and is used to change SDP attributes of an existing session (e.g., media direction, endpoints, or codes) that were negotiated during call establishment. In embodiments, the call hold SIP message includes a "send only" (sendonly) session description protocol (SDP) direction. However, changes in these SDP attributes can require, in some instances, changes in the forwarding rules. For example, if the endpoint has changed after receiving a call hold indication then the forwarding rules would need to change to accommodate the new endpoint. In embodiments, the Iptables Manager uses information received via SIP and SDP to determine whether to update or delete/add the forwarding rules that were set on the call establishment.

The method 900 further includes the Iptables Manager 358 deleting the set of forwarding rules from the NAT based on the received call hold indication (904). As discussed above, the decision may include using SIP signaling events to determine whether to delete the rules. In embodiments, when the Iptables Manager determines to delete the set of forwarding rules during a call hold based on one or more of the endpoints changing, the Iptables Manager may save the one or more changed endpoints to a call table that includes a destination address of the server and a destination address of the secondary base station.

In embodiments, if the Iptables Manager 358 receives a call hold indication, the Iptables Manager 358 may delete the set of forwarding rules. In embodiments, the call hold SIP message includes a send only (sendonly) session description protocol (SDP) direction.

The method 900 further includes receiving a call resume indication (906). If the Iptables Manager 358 receives a call resume indication, the Iptables Manager 358 may add the set of forwarding rules to the NAT 356 based on the receiving a call resume indication. The method 900 further includes the Iptables Manager adding a new set of forwarding rules to the network address translation table based on the receiving of the call resume indication (908). As discussed above, the new forwarding can be tailored to account for the changes in SDP attributes of an existing session.

For example, if a far-end account (e.g., an account associated with server 160) is using early-media, the initial SDP sent to the primary base station 110 contains IP:port address of a SIP/media server (so audio is substituted for ringback). However, when the server 160 answers, the reINVITE/SDP sent to the primary base station 220 contains the IP address and port values of the server 160 (to switch back to regular voice audio). In this case, the transport endpoints on the actual call leg have changed, so the RTP forwarding rules must be updated. On the reINVITE, the Iptables Manager checks if the endpoints have changed. If so, it deletes old rules, sets new rules, and saves the new endpoint values. On call hold/resume, the holding party sends SIP reINVITE messages with SDP direction "sendonly", followed by "sendrecv" (when the call is resumed). Since the media endpoints are unchanged by the resume, the RTP forwarding rules (as set on call establishment) are still valid. However, the Iptables Manager deletes and adds the RTP forwarding rules during a local hold/resume to prevent mismatching errors. For a remote hold (i.e., hold on server 160), the RTP forwarding rules established on call setup remain in place (as required for MoH, e.g., FreePBX server).

The kernel of the primary base station 220 may include a connection tracker that tracks the flow of packets from the secondary base station 230 or server 160. When the connection tracker detects a new RTP/RTCP packet flow from the secondary base station 230 or sever 160, the connection tracker will create a new flow connection after consulting the NAT. For the connection tracker to function properly, the forwarding rules are to be created early as possible (otherwise the connection tracker will already be set and the forwarding rules will have no effect). Thus, in embodiments, the forwarding rules are configured after one or more media port selections have been completed but before any media packets of the call have been received. Once a call has been terminated, the connection flow the connection tracker will delete the flow connection. Accordingly, in embodiments, after adding the set of forwarding rules, the Iptables Manager will delete each packet flow between the primary base station and the server and the primary base station and the secondary base station tracked by the kernel connection tracker.

In embodiments, the primary base station 220, secondary base station 230, and server 160 may be on an IPv6 network. IPv6 networks include redirect messages that are part of the Neighbor Discover Protocol and are sent to inform hosts of better hop routing decisions. In the case of RTP forwarding, the primary base station 220 will send out ICMPv6 Redirect messages to the secondary base station 1230 and server 160 every 2-4 seconds to inform them to send directly to each other (e.g., secondary base station 230 sends directly to the end server 160). The Iptables Manager 358 can be configured to disable these redirect messages, as they are unnecessary.

Thus, in embodiments, an outbound redirect message from the primary base station 220 to the server 160 and an outbound redirect message from the primary base station 220 to the secondary base station 230 are internet control message protocol version 6 (ICMPv6) messages. The Iptables Manager may disable the outbound redirect message from the primary base station 220 to the server 160 and disable an outbound redirect message from the primary base station 220 to the secondary base station 160. The Iptables Manager may disable the outbound redirect messages on call establishment and enable the outbound redirect messages after call termination.

In embodiments, the Iptables Manager 358 may, prior to the adding of the set forwarding rules to the network address translation table, create a shell process that includes a destination address of the secondary base station, a destination address of the server, and a source address of the primary base station. The shell process may be further configured to run a command to add the set of forwarding rules to the network address translation table managed by the primary base station (e.g., by the kernel or a user-space application). For example, the command can be an *iptables* command. The command may be spawned by the shell process using either a *system*() call or an *execl*() call.

Thus, adding or deleting of the forwarding rules in the NAT tables can be handled via the shell processes created to run the commands (such as *iptables* command, *ip6tables* command, *ip4tables* command, etc.) The shell script may require the following arguments: "-a" or "-d" (to add or delete rules), and four addresses (e.g., IP address and port values) that specify the media endpoints of the proxy call leg 202, and actual call leg 204 call legs).

The claimed software elements can be realized on a variety of telecommunications systems or subsystems. The following description, in conjunction with the disclosed embodiments described in the foregoing, provides representative, non-limiting examples of potential communications systems or subsystems that could be used to execute the claimed software elements.

At a high level, a communications system or subsystem typically includes, but is not limited to, communication devices, networks, base stations, servers, and a variety of other hardware and software components. Communication devices may include a broad range of devices such as cordless telephones, mobile phones, smartphones, computers, tablets, and other types of devices capable of sending and receiving communication signals. These devices usually include at least one processor, memory, a user interface (such as a display, keyboard, or touch screen), and a network interface for connecting to a network.

The network component of a communications system or subsystem can take various forms, including multi-cell systems, e.g., Digital Enhanced Cordless Telecommunications (DECT), public switched telephone networks (PSTN), the Internet, mobile networks (e.g., 3G, 4G, 5G), local area networks (LAN), wide area networks (WAN), and others. Base stations and/or servers are also commonly part of communications systems, facilitating the storage, processing, and exchange of data. Like the aforementioned communication devices, these elements generally include a processor and memory for executing software applications, as well as network interfaces for communicating with the network and other devices.

Software elements in the telecommunications system may include operating systems, device drivers, networking software, applications, and other types of software. These software elements can be executed on communication devices, base stations, servers, or other hardware components of the telecommunications systems or subsystems. The claimed software elements may be embodied as computer program code (sometimes referred to as instructions) that is executed on one or more of the hardware components of the telecommunications system or subsystem. This code can be provided by way of a computer-readable medium. A computer readable medium may be provided by way of a computer-readable storage medium and/or a computer-readable transmission medium. A computer-readable storage medium, which may be described as being non-transitory, can store the code. A computer-readable storage medium may be part of the communication device, base station, server, or other component, or may be an external storage device, network storage, or cloud storage. A computer-readable transmission medium may include carrier waves, transmission signals or the like. A computer-readable transmission medium may convey instructions between components of a single computer system and/or between plural separate computer systems.

It should be noted that the described communications systems and subsystems are illustrative and that the claimed software elements can be executed on any suitable communications system or subsystem. The specific configuration of the communications system or subsystem may vary depending on the requirements of the application, performance characteristics of the system, cost considerations, and other factors. The scope is not limited to the specific communications systems and subsystems described herein but includes any and all systems or subsystems suitable for implementing the presently taught approaches.

Therefore, from one perspective, there have been described approaches for establishing a call between a wireless terminal, which is associated with a secondary base station of a multi-cell system, and a server via network address translation-based packet forwarding by a primary base station of the multi-cell system. The method includes receiving, at the primary base station of the multi-cell system, a request to establish a call between the secondary base station of the multi-cell system and the server. The method further includes adding a set of forwarding rules to a network address translation table of the primary base station. The set of forwarding rules instructs the primary base station to forward packets of the call received from the server to the secondary base station and to forward packets of the call received from the secondary base station to the server.

Further examples of feature combinations taught by the present disclosure are set out in the following numbered clauses.

Clause 1. A method of establishing a call between a wireless terminal and a server, the wireless terminal associated with a secondary base station of a multi-cell network, via network address translation-based packet forwarding by a primary base station of the multi-cell network, the method comprising: receiving, at the primary base station of the multi-cell network, a request to establish a call between the secondary base station of the multi-cell network and the server; adding a set of forwarding rules to a network address translation table of the primary base station, the set of forwarding rules instructing the primary base station to forward packets of the call received from the server to the secondary base station and to forward packets of the call received from the secondary base station to the server.

Clause 2. The method of clause 1, wherein said adding of the set of forwarding rules to the network address translation table is performed by an application running on one or more processors of the primary base station.

Clause 3. The method of clause 1, wherein said adding of the set of forwarding rules to the network address translation table is performed by a kernel of an operating system running on one or more processors of the primary base station.

Clause 4. The method of any of clauses 1 to 3, wherein said adding of the set of forwarding rules comprises: adding a first rule to change a destination address of the packets to an address of the secondary base station for packets inbound to the primary base station from the server; adding a second rule to change a source address of the packets to an address of the primary base station for packets outbound from the primary base station to the secondary base station; adding a third rule to change a destination address of the packets to an address of the server for packets inbound from the secondary base station to the primary base station; and adding a fourth rule to change a source address of the packets to an address of the primary base station for packets outbound from the primary base station to the server.

Clause 5. The method of clause 4, wherein one or more of the following comprises an IP address and a port value: the destination address of the packets, the address of the secondary base station, the source address of the packets, the address of the primary base station, and the address of the server.

Clause 6. The method of clause 5, wherein the set of forwarding rules comprises a first subset of forwarding rules for forwarding real time protocol (RTP) packets and a second subset of forwarding rules for forwarding real time control protocol (RTCP) packets.

Clause 7. The method of any preceding clause, further comprising: determining whether the call has been terminated; and based on said determining whether the call has been terminated, deleting the set of forwarding rules.

Clause 8. The method of any preceding clause, wherein one or more outbound packets flows from the primary base station to the server and/or secondary base station are disabled after said receiving a request to establish a call between the secondary base station and the server.

Clause 9. The method of any preceding clause, further comprising: generating an entry for the call in a call table, wherein the entry includes an indication of whether the set of forwarding rules is enabled for the call, a destination address of the server, and a destination address of the secondary base station for the call.

Clause 10. The method of clause 9, further comprising: determining whether the call has terminated; and based on said determining whether the call has ended, deleting the entry for the call in the call table.

Clause 11. The method of clause 9 or 10, wherein the set of forwarding rules is indicated as enabled in the entry for the call if the set of forwarding rules has been added to the network address translation table.

Clause 12. The method of clause 9, 10 or 11, wherein the entry for the call further includes one or more pointers identifying the call, said one or more pointers including a first pointer identifying a message flow between the primary base station and the server and a second pointer identifying a message flow between the primary base station and the second primary base station.

Clause 13. The method of any of clauses 9 to 12, wherein the entry for the call further includes one or more media transport states of the call received via session description protocol (SDP), said one or more media transport states including one or more media states of a message flow between the primary base station and the server and a media transport state of a message flow between the primary base station and the secondary base station.

Clause 14. The method of any preceding clause, further comprising: determining whether to update or delete the set of forwarding rules based on one or more SIP signaling events.

Clause 15. The method of any preceding clause, further comprising: determining whether one or more endpoints have changed; and based on said determining whether one or more endpoints have changed, deleting the set of forwarding rules and adding a new set forwarding rules to the network address translation table.

Clause 16. The method of clause 15, further comprising: saving said one or more endpoints which have changed to a call table that includes a destination address of the server and a destination address of the secondary base station.

Clause 17. The method of any preceding clause, further comprising: receiving a call hold indication; deleting the set of forwarding rules based on said receiving a call hold indication; receiving a call resume indication; and adding a new set of forwarding rules to the network address translation table based on said receiving a call resume indication.

Clause 18. The method of clause 17, further comprising: determining, prior to said deleting the set of forwarding rules, whether the call hold indication was received from the secondary base station; and proceeding, upon determining that the call hold indication was received from the secondary base station, with said deleting the set of forwarding rules.

Clause 19. The method of clause 3 or any clause dependent thereon, wherein the set of forwarding rules is configured after one or more media port selections have been completed but before any media packets of the call have been received.

Clause 20. The method of clause 3 or any clause dependent thereon, further comprising: after said adding of the set of forwarding rules, deleting each packet flow between the primary base station and the server and the primary base station and the secondary base station tracked by a kernel connection tracker.

Clause 21. The method of any preceding clause, further comprising: disabling an outbound redirect message from the primary base station to the server; and disabling an outbound redirect message from the primary base station to the secondary base station.

Clause 22. The method of clause 21, wherein the outbound redirect message from the primary base station to the server and the outbound redirect message from the primary base station to the secondary base station are internet control message protocol version 6 (ICMPv6) messages.

Clause 23. The method of clause 3 or any clause dependent thereon, further comprising: creating, prior to said adding the set forwarding rules to the network address translation table, a shell process that includes a destination address of the secondary base station, a destination address of the server, and a source address of the primary base station.

Clause 24. The method of clause 23, wherein the shell process is further configured to run an iptables command to add the set of forwarding rules to the network address translation table.

Clause 25. A system for establishing a call in a multi-cell network between a wireless terminal and a server via network address translation-based packet forwarding, the network including a plurality of base stations to provide communication with one or more wireless terminals, the system comprising: a primary base station of the plurality of base stations, a secondary base station of the plurality of base stations in communication with the primary base station, a wireless terminal, of said one or more wireless terminals, associated with the secondary base station, wherein the primary base station comprises one or more processors in communication with a memory, the memory comprising instructions executable by said one or more processors to perform: receiving, at the primary base station of the multi-cell system, a request to establish a call between the secondary base station of the multi-cell system and the server; adding a set of forwarding rules to a network address translation table of the primary base station, the set of forwarding rules instructing the primary base station to forward packets of the call received from the server to the secondary base station and to forward packets of the call received from the secondary base station to the server.

Clause 26. The system of clause 25, wherein said adding of the set of forwarding rules to the network address translation table is performed by an application running on said one or more processors of the primary base station.

Clause 27. The system of clause 25, wherein said adding of the set of forwarding rules to the network address translation table is performed by a kernel of an operating system running on said one or more processors of the primary base station.

Clause 28. The system of any of clauses 25 to 27, wherein said adding of the set of forwarding rules comprises: adding a first rule to change a destination address of the packets to an address of the secondary base station for packets inbound to the primary base station from the server; adding a second rule to change a source address of the packets to an address of the primary base station for packets outbound from the primary base station to the secondary base station; adding a third rule to change a destination address of the packets to an address of the server for packets inbound from the secondary base station to the primary base station; and adding a fourth rule to change a source address of the packets to an address of the primary base station for packets outbound from the primary base station to the server.

Clause 29. The system of any of clauses 25 to 28, wherein the memory further comprises instructions executable by said one or more processors to perform: determining whether the call has been terminated; and based on said determining whether the call has been terminated, deleting the set of forwarding rules.

Clause 30. The system of any of clauses 25 to 29, wherein one or more outbound packets flows from the primary base station to the server and/or secondary base station are disabled after said receiving a request to establish a call between the secondary base station and the server.

Clause 31. The system of any of clauses 25 to 30, wherein the memory further comprises instructions executable by said one or more processors to perform: generating an entry for the call in a call table, wherein the entry includes an indication of whether the set of forwarding rules is enabled for the call, a destination address of the server, and a destination address of the secondary base station for the call.

Clause 32. The system of clause 31, wherein the memory further comprises instructions executable by said one or more processors to perform: determining whether the call has terminated; and based on said determining whether the call has ended, deleting the entry for the call in the call table.

Clause 33. The system of clause 31 or 32, wherein the set of forwarding rules is indicated as enabled in the entry for the call if the set of forwarding rules has been added to the network address translation table.

Clause 34. The system of clause 31, 32 or 33, wherein the entry for the call further includes one or more pointers identifying the call, said one or more pointers including a first pointer identifying a message flow between the primary base station and the server and a second pointer identifying a message flow between the primary base station and the second primary base station.

Clause 35. The system of any of clauses 31 to 34, wherein the entry for the call further includes one or more media transport states of the call received via session description protocol (SDP), said one or more media transport states including one or more media states of a message flow between the primary base station and the server and a media transport state of a message flow between the primary base station and the secondary base station.

Clause 36. The system of any one of clauses 25 to 35, wherein the memory further comprises instructions executable by said one or more processors to perform: determining whether one or more endpoints have changed; and based on said determining whether one or more endpoints have changed, deleting the set of forwarding rules and adding a new set forwarding rules to the network address translation table.

Clause 37. The system of clause 36, wherein the memory further comprises instructions executable by said one or more processors to perform: saving said one or more endpoints which have changed to a call table that includes a destination address of the server and a destination address of the secondary base station.

Clause 38. The system of any of clauses 25 to 37, wherein the memory further comprises instructions executable by said one or more processors to perform: receiving a call hold indication; deleting the set of forwarding rules based on said receiving a call hold indication; receiving a call resume indication; and adding a new set of forwarding rules to the network address translation table based on said receiving a call resume indication.

Clause 39. The system of clause 38, wherein the memory further comprises instructions executable by said one or more processors to perform: determining, prior to said deleting the set of forwarding rules, whether the call hold indication was received from the secondary base station; and proceeding, upon determining that the call hold indication was received from the secondary base station, with said deleting the set of forwarding rules.

Clause 40. The system of clause 27 or any clause dependent thereon, wherein the memory further comprises instructions executable by said one or more processors to perform: after said adding of the set of forwarding rules, deleting each packet flow between the primary base station and the server and the primary base station and the secondary base station tracked by a kernel connection tracker.

Clause 41. The system of any of clauses 25 to 40, wherein the memory further comprises instructions executable by said one or more processors to perform: disabling an outbound redirect message from the primary base station to the server; and disabling an outbound redirect message from the primary base station to the secondary base station.

Clause 42. The system of clause 27 or any clause dependent thereon, wherein the memory further comprises instructions executable by said one or more processors to perform: creating, prior to said adding the set forwarding rules to the network address translation table, a shell process that includes a destination address of the secondary base station, a destination add¬ress of the server, and a source address of the primary base station, wherein the shell process is further configured to run an iptables command to add the set of forwarding rules to the network address translation table.

The foregoing detailed description has presented various implementations of the devices and/or processes through the use of block diagrams, schematics, and illustrative examples. As such block diagrams, schematics, and examples include one or more functions and/or operations, it should be understood by those skilled in the art that each function and/or operation within these block diagrams, flowcharts, or examples can be implemented individually and/or collectively by employing a wide range of hardware, software, firmware, or any combination thereof. It should also be recognized by those skilled in the art that the methods or algorithms described herein may incorporate additional steps, may exclude some steps, and/or may execute steps in an order different from the one specified. The various implementations described above can be combined to create additional implementations.

These modifications and other changes can be made to the implementations in light of the above-detailed description. Generally, the terms used in the following claims should not be construed to limit the claims to the specific implementations disclosed in the specification and the claims. Instead, they should be interpreted to encompass all possible implementations, along with the full scope of equivalents to which such claims are entitled. Consequently, the claims are not limited by the disclosure but are intended to cover all possible implementations within their scope.

## Claims

1. A method of establishing a call between a wireless terminal and a server, the wireless terminal associated with a secondary base station of a multi-cell network, via network address translation-based packet forwarding by a primary base station of the multi-cell network, the method comprising:
receiving, at the primary base station of the multi-cell network, a request to establish a call between the secondary base station of the multi-cell network and the server;
adding a set of forwarding rules to a network address translation table of the primary base station, the set of forwarding rules instructing the primary base station to forward packets of the call received from the server to the secondary base station and to forward packets of the call received from the secondary base station to the server.

2. The method of claim 1, wherein said adding of the set of forwarding rules to the network address translation table is performed by a kernel of an operating system running on one or more processors of the primary base station.

3. The method of claim 2, wherein the set of forwarding rules is configured after one or more media port selections have been completed but before any media packets of the call have been received.

4. The method of claim 2 or 3, further comprising:
after said adding of the set of forwarding rules, deleting each packet flow between the primary base station and the server and the primary base station and the secondary base station tracked by a kernel connection tracker.

5. The method of claim 2, 3 or 4, further comprising:
creating, prior to said adding the set forwarding rules to the network address translation table, a shell process that includes a destination address of the secondary base station, a destination address of the server, and a source address of the primary base station, for example wherein the shell process is further configured to run an *iptables* command to add the set of forwarding rules to the network address translation table.

6. The method of any preceding claim, wherein said adding of the set of forwarding rules comprises:
adding a first rule to change a destination address of the packets to an address of the secondary base station for packets inbound to the primary base station from the server;
adding a second rule to change a source address of the packets to an address of the primary base station for packets outbound from the primary base station to the secondary base station;
adding a third rule to change a destination address of the packets to an address of the server for packets inbound from the secondary base station to the primary base station; and
adding a fourth rule to change a source address of the packets to an address of the primary base station for packets outbound from the primary base station to the server.

7. The method of any preceding claim, further comprising:
determining whether the call has been terminated; and
based on said determining whether the call has been terminated, deleting the set of forwarding rules.

8. The method of any preceding claim, wherein one or more outbound packets flows from the primary base station to the server and/or secondary base station are disabled after said receiving a request to establish a call between the secondary base station and the server.

9. The method of any preceding claim, further comprising:
generating an entry for the call in a call table, wherein the entry includes an indication of whether the set of forwarding rules is enabled for the call, a destination address of the server, and a destination address of the secondary base station for the call; and
the method further comprising in some examples, determining whether the call has terminated, and based on said determining whether the call has ended, deleting the entry for the call in the call table.

10. The method of any preceding claim, further comprising:
determining whether to update or delete the set of forwarding rules based on one or more SIP signaling events.

11. The method of any preceding claim, further comprising:
determining whether one or more endpoints have changed; and
based on said determining whether one or more endpoints have changed, deleting the set of forwarding rules and adding a new set forwarding rules to the network address translation table.

12. The method of any preceding claim, further comprising:
receiving a call hold indication;
deleting the set of forwarding rules based on said receiving a call hold indication;
receiving a call resume indication; and
adding a new set of forwarding rules to the network address translation table based on said receiving a call resume indication.

13. The method of claim 12, further comprising:
determining, prior to said deleting the set of forwarding rules, whether the call hold indication was received from the secondary base station; and
proceeding, upon determining that the call hold indication was received from the secondary base station, with said deleting the set of forwarding rules.

14. The method of any preceding claim, further comprising:
disabling an outbound redirect message from the primary base station to the server; and
disabling an outbound redirect message from the primary base station to the secondary base station
wherein, for example, the outbound redirect message from the primary base station to the server and the outbound redirect message from the primary base station to the secondary base station are internet control message protocol version 6 (ICMPv6) messages.

15. A system for establishing a call in a multi-cell network between a wireless terminal and a server via network address translation-based packet forwarding, the network including a plurality of base stations to provide communication with one or more wireless terminals, the system comprising:
a primary base station of the plurality of base stations,
a secondary base station of the plurality of base stations in communication with the primary base station,
a wireless terminal, of said one or more wireless terminals, associated with the secondary base station,
wherein the primary base station comprises one or more processors in communication with a memory, the memory comprising instructions executable by said one or more processors to perform:
receiving, at the primary base station of the multi-cell system, a request to establish a call between the secondary base station of the multi-cell system and the server;
adding a set of forwarding rules to a network address translation table of the primary base station, the set of forwarding rules instructing the primary base station to forward packets of the call received from the server to the secondary base station and to forward packets of the call received from the secondary base station to the server.
